# DEMANDE DE BREVET EUROPEEN

(11) **EP 1 266 798 A1**
(43) Date de publication de la demande: **18.12.2002**
(21) Numéro de dépôt: 02291456.8
(22) Date de dépôt: 12.06.2002
(51) Int. Cl.: B60Q 1/44

(54) **Installation de déclanchement de l'allumage des feux de stop pour un véhicule automobile**

(30) Priorité: 13.06.2001 FR 0107726
(71) Demandeur: ROBERT BOSCH GmbH, 70442 Stuttgart (DE)
(72) Inventeur: Salou, Alain, 75018 Paris (FR)
(74) Mandataire: Hurwic, Aleksander Wiktor

(57) **Abrégé**

Installation de déclenchement de l'allumage des feux de stop dès le début de l'actionnement de la pédale de frein, comprenant un maître-cylindre dont le piston est actionné par la pédale de frein.

Un capteur électromagnétique (11) est installé sur le maître-cylindre et détectant la position du piston (3, 6, 62) (présence/absence) dans la position de repos (Po) du piston. Ce capteur (11) comprend un circuit bouchon (111) alimenté par un oscillateur (111) et accordé sur la fréquence de celui-ci, lorsque le piston (3, 6, 62) est au repos, pour bloquer l'oscillation de l'oscillateur, le déplacement du piston désaccordant le circuit bouchon et laissant passer le signal de l'oscillateur.

Un circuit de traitement (112) détecte le signal oscillant transmis par le circuit bouchon (111) désaccordé pour le mettre en forme et commander (113) les feux de stop.

## Description

La présente invention concerne une installation de déclenchement de l'allumage des feux de stop dès le début de l'actionnement de la pédale de frein, comprenant un maître-cylindre dont le piston est actionné par la pédale de frein.

### Etat de la technique

Il est connu de déclencher les feux de stop d'un véhicule automobile à partir d'un contacteur placé sur le trajet de la pédale de frein ou associer un élément mis en mouvement par la pédale et qui s'ouvre dès que la pédale est actionnée. Toutefois le positionnement de ce contacteur et son ouverture sont relativement peu précis et rien ne permet de garantir dans ce montage existant que les feux de stop seront déclenchés dès l'actionnement de la pédale de frein.

Il existe également des détecteurs utilisant un capteur à effet Hall. Mais ce système nécessite l'utilisation et la mise en place d'aimants ce qui transpose simplement le problème mécanique de la solution ancienne décrite ci-dessus sans rendre le fonctionnement plus précis.

En résumé, les différents moyens de déclencher les feux de stop connus actuellement manquent soit de précision et de fiabilité lorsqu'il s'agit de dispositifs à fonctionnement mécanique. Dans le cas de dispositifs à fonctionnement électromagnétique, l'installation devient coûteuse sans que cela ne soit au profit d'une meilleure fiabilité ou précision.

### Problème posé et solution

La présente invention a pour but de développer un moyen permettant de détecter l'actionnement du frein d'un véhicule dès le début de cet actionnement, et avec des moyens simples sans nécessiter de transformation importante du système de freinage et surtout sans intervenir directement sur le système de freinage.

A cet effet, l'invention concerne une installation du type défini ci-dessus caractérisée en ce que
- un capteur électromagnétique installé sur le maître-cylindre et détectant la position du piston (présence/absence) dans la position de repos du piston,
- le capteur comprenant un circuit bouchon alimenté par un oscillateur et accordé sur la fréquence de celui-ci, lorsque le piston est au repos, pour bloquer l'oscillation de l'oscillateur, le déplacement du piston désaccordant le circuit bouchon et laissant passer le signal de l'oscillateur,
- un circuit de traitement détectant le signal oscillant transmis par le circuit bouchon désaccordé pour le mettre en forme et commander les feux de stop.

Cette installation ne transforme pas une partie quelconque du système de freinage et le maître-cylindre qui fait partie de l'installation est repris sans modification, le capteur étant simplement associé au maître-cylindre dans une position précise.

De façon avantageuse, le capteur est vissé dans la paroi du maître-cylindre au voisinage de la position de repos du piston, notamment du piston auxiliaire dans le cas d'un maître-cylindre tandem.

La position de repos du piston d'un maître-cylindre simple ou du piston auxiliaire dans le cas d'un maître-cylindre tandem est parfaitement connue et définie précisément, aussi est-il possible de réaliser un taraudage même non traversant dans la paroi du maître-cylindre pour y visser le capteur afin que celui-ci soit soumis à l'influence du piston.

Le réglage du circuit bouchon sur la fréquence de l'oscillateur se fait lorsque l'installation est au repos, le frein n'étant pas actionné. Toutes les pièces, notamment le piston soit principal soit auxiliaire, occupent alors une position définie, intervenant dans le réglage du circuit bouchon.

Il est alors possible, par le condensateur réglable, de régler le circuit bouchon sur la fréquence de l'oscillateur pour la position ainsi définie des différents éléments.

Dès qu'à partir de ce moment, le piston du maître-cylindre, qu'il s'agisse de l'unique piston ou du piston flottant (ou même du piston principal) se déplace par rapport à sa position de repos, il déséquilibre le capteur détectant la positon de repos. Il ne fonctionne plus comme circuit bouchon et laisse passer le signal de l'oscillateur.

Ce signal détecté est traité pour former un signal de commande des feux de stop.

De façon particulièrement avantageuse, dans le cas d'un maître-cylindre tandem dont le piston auxiliaire est retenu dans sa position de fin de course correspondant à sa positon de repos par une goupille traversant le piston dans sa partie hors pression, le capteur est associé à cette goupille.

Suivant la forme du piston flottant et la position du capteur au voisinage du piston flottant, l'intervention du piston flottant sur l'inductance du circuit bouchon n'est pas brusque mais progressive ce qui permet de recueillir en sortie un signal plus ou moins proportionnel à ce déplacement et non pas à un signal de commutation.

Pour certaines applications, ce signal proportionnel est utile.

### Dessins

La présente invention sera décrite de manière plus détaillée à l'aide des dessins annexés dans lesquels
- la figure 1 est une vue en coupe d'un maître-cylindre tandem selon l'invention,
- la figure 2 est un schéma par blocs de la partie électronique du déclencheur de feux de stop selon l'invention,
- la figure 3 montre une variante de maître-cylindre tandem avec un piston flottant à forme progressive.

### Description des modes de réalisation

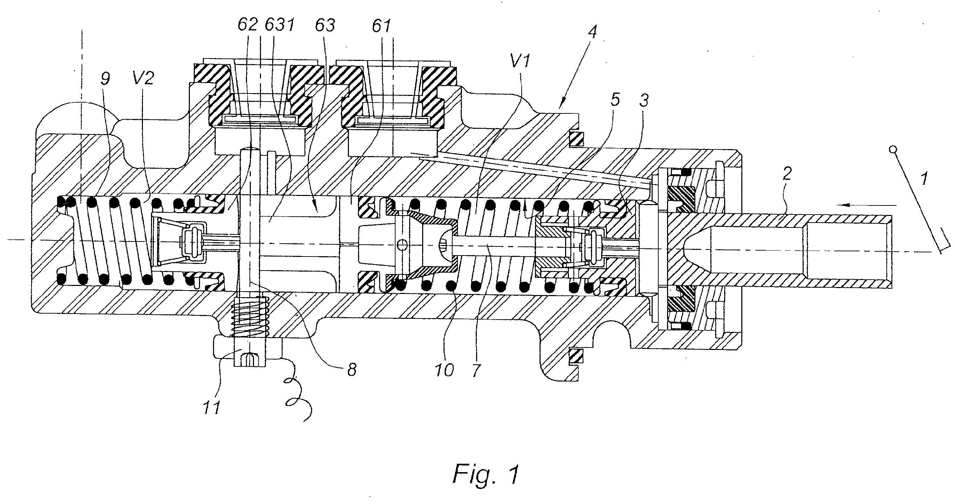

Selon la figure 1, l'invention concerne une installation de déclenchement de l'allumage des feux de stop dès le début de l'actionnement de la pédale de frein.

La pédale de frein 1 est associée à la tige 2 du piston principal 3 d'un maître-cylindre 4 tandem par l'intermédiaire d'un servofrein non représenté. Le maître-cylindre 4 se compose d'un alésage 5 logeant un piston auxiliaire 6 en forme de diabolo, constitué en fait par deux parties 61, 62 jumelées et séparées par une entretoise 63. Ce piston auxiliaire 6 subdivise l'alésage 5 en une première chambre V1 et une seconde chambre V2. Chacune de ces chambres est associée à un circuit de freinage.

Le piston auxiliaire 6 est commandé hydrauliquement par le piston principal 3 en lui étant toutefois relié mécaniquement par une tige de rappel 7 qui tire le piston auxiliaire 6 dans sa position de repos où position de fin de course vers la gauche selon la figure 1.

Cette position de fin de course est limitée par une butée 8 traversant l'entretoise 63 du piston auxiliaire 6. Cette butée est une simple goupille placée dans un trou oblong 631 de l'entretoise 63 et qui limite le mouvement du piston auxiliaire à la position de repos représentée à la figure 1.

Le piston auxiliaire 6 est poussé également vers cette position de repos par un ressort 9. Le piston principal 3 est poussé vers sa position de repos à droite, par un ressort de rappel 10 prenant appui sur la première partie 61 du piston auxiliaire 6.

Les autres détails de ce maître-cylindre tandem sont connus de l'homme du métier et pour leur description détaillée, on se reportera à des ouvrages spécialisés, notamment au Mémento de la Technologie Automobile BOSCH.

Selon l'invention, ce maître-cylindre 4 est équipé d'un capteur 11 associé à la goupille 8 ; il est vissé ou placé autour d'une extrémité de la goupille 8, à proximité de la position de repos de la seconde partie 62 du piston auxiliaire 6 pour être dans le champ d'action de cette partie 62.

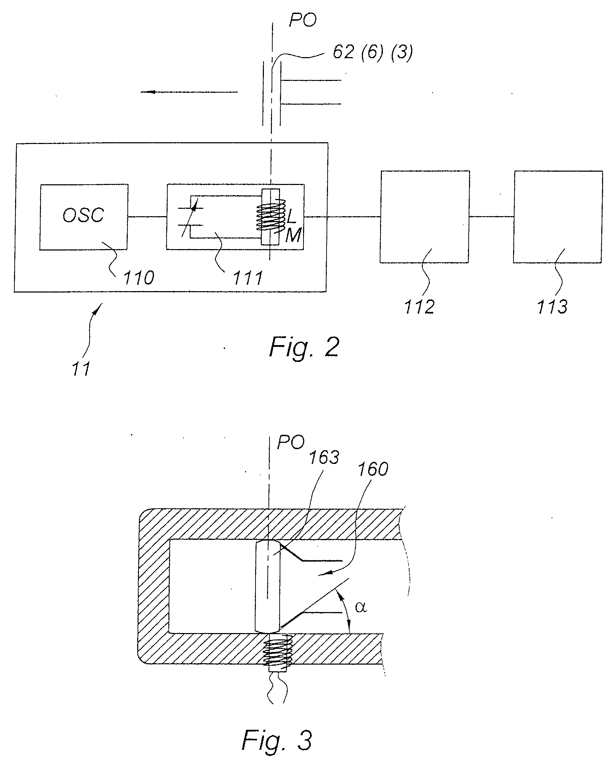

Selon la figure 2, le capteur 11 se compose d'un oscillateur 110 générant un signal d'une certaine fréquence, de préférence relativement élevée ; il est relié à un circuit bouchon 111 accordé sur cette fréquence de l'oscillateur.

Le circuit bouchon 111 est relié à un circuit de traitement 112, recevant le signal traversant le circuit bouchon 111 lorsque celui-ci est désaccordé. Le circuit de traitement 112 fournit un signal de déclenchement à la commande 113 des feux de stop. Ce signal peut être combiné au signal usuel des feux de stop.

Le circuit bouchon 111 composé d'un condensateur C et d'une self L avec un noyau M, est placé au voisinage de la position de repos Po du piston auxiliaire 6 (ou du piston principal s'il n'y a qu'un seul piston) ; le condensateur C du circuit bouchon 111 est réglé en tenant compte des paramètres des composants du circuit et de la proximité du piston auxiliaire 6 (seconde partie 62) dans sa positon de repos P0, pour fonctionner alors comme circuit bouchon. Il bloque alors le signal de l'oscillateur qui n'est pas transmis au circuit 112 et celui-ci n'actionne par les feux stop.

Au début d'une action de freinage, si le piston auxiliaire 6 (62) se déplace par rapport à sa position de repos P0, ceci modifie l'inductance de la self et déséquilibre le circuit bouchon 111 qui laisse alors passer le signal de l'oscillateur 110. Ce signal attaque le circuit de traitement 112 qui agit sur la commande 113 des feux de stop par des moyens appropriés.

Si la forme du piston auxiliaire coopérant avec le capteur 111 est à contour franc au niveau de la position de repos, le signal sera franc, assimilable à un signal de commutation puisque le déséquilibrage du circuit bouchon 11 sera net.

Au contraire si selon l'exemple de la figure 3, la partie 163 du piston auxiliaire 160, associée à la position de repos P0 présente une forme à variation progressive figurée par l'angle d'inclinaison (α), le capteur 11 réagira plus progressivement ; sa self sera modifiée plus progressivement ce qui déséquilibrera progressivement le circuit bouchon 111 qui fournira ainsi un signal de type analogique progressif. Le circuit de traitement 112 sera adapté à ce signal progressif pour le comparer non pas à un seuil unique comme un signal de commutation mais à plusieurs seuils ce qui permet d'exploiter plus finement le déplacement du piston auxiliaire 160 (il peut également s'agir du piston principal si celui-ci a une telle forme progressive) et commander les feux de stop différemment, par exemple de manière progressive suivant le déplacement du piston par rapport à la position de repos.

## Revendications

1. Installation de déclenchement de l'allumage des feux de stop dès le début de l'actionnement de la pédale de frein, comprenant un maître-cylindre dont le piston est actionné par la pédale de frein,
**caractérisé par**
- un capteur électromagnétique (11) installé sur le maître-cylindre et détectant la position du piston (3, 6, 62) (présence/absence) dans la position de repos (Po) du piston,
- le capteur (11) comprenant un circuit bouchon (111) alimenté par un oscillateur (111) et accordé sur la fréquence de celui-ci, lorsque le piston (3, 6, 62) est au repos, pour bloquer l'oscillation de l'oscillateur, le déplacement du piston désaccordant le circuit bouchon et laissant passer le signal de l'oscillateur,
- un circuit de traitement (112) détectant le signal oscillant transmis par le circuit bouchon (111) désaccordé pour le mettre en forme et commander (113) les feux de stop.

2. Installation selon la revendication 1,
**caractérisée en ce que**
le capteur (11) est fixé à la paroi du maître-cylindre (4) au voisinage de la position (Po) de repos du piston (3, 6, 62).

3. Installation selon la revendication 1,
**caractérisée en ce que**
le maître-cylindre (4) est un maître-cylindre tandem comprenant un piston principal (3) directement relié à la pédale de frein (1) et un piston auxiliaire (6, 62) flottant, le capteur (11) étant associé au piston auxiliaire (6, 62).

4. Installation selon la revendication 3,
**caractérisée en ce que**
le capteur (11) est installé au niveau de la goupille de limitation de course (8) du piston auxiliaire (6).
